# EUROPÄISCHE PATENTSCHRIFT

(11) **EP 2 129 540 B1**
(45) Veröffentlichungstag und Bekanntmachung des Hinweises auf die Patenterteilung: **28.07.2010**
(21) Anmeldenummer: 08715517.2
(22) Anmeldetag: 27.02.2008
(51) Int. Cl.: B60J 7/02, B60J 7/057

(54) **ÖFFNUNGSFÄHIGES FAHRZEUGDACH MIT EINER BETÄTIGUNGSEINRICHTUNG FÜR EIN BEWEGBARES DACHELEMENT**
OPENING VEHICLE ROOF HAVING AN ACTUATING DEVICE FOR A MOVABLE ROOF ELEMENT
TOIT OUVRANT DE VÉHICULE AVEC UN DISPOSITIF D'ACTIONNEMENT POUR UN ÉLÉMENT MOBILE DE TOIT

(30) Priorität: 02.03.2007 DE 102007010317
(43) Veröffentlichungstag der Anmeldung: 09.12.2009
(73) Patentinhaber: Webasto AG, 82131 Stockdorf (DE)
(72) Erfinder: DIETL, Rudolf, 81247 München (DE); RAPS, Tobias, 81547 München (DE)
(74) Vertreter: advotec.
(86) Internationale Anmeldenummer: PCT/DE2008/000325
(87) Internationale Veröffentlichungsnummer: WO 2008/106930

(56) Entgegenhaltungen:
- DE-B4- 10 203 204

## Beschreibung

Die Erfindung betrifft ein öffnungsfähiges Fahrzeugdach mit einer Betätigungseinrichtung für ein bewegbares Dachelement nach dem Oberbegriff des Anspruchs 1.

Aus der DE 102 03 204 B4 ist ein gattungsgemäßes Fahrzeugdach bekannt, welches als Faltdach ausgebildet ist. Das bekannte Fahrzeugdach umfasst ein faltbares Verdeck, das aus einem flexiblen Material gebildet ist und an seinem in Fahrzeuglängsrichtung nach vorne weisenden Ende einen als Dachspitze ausgebildeten Frontspiegel aufweist. Der Frontspiegel stellt ein Dachelement dar, welches mittels einer Betätigungseinrichtung betätigbar ist. In einem geschlossenen Zustand des Verdecks liegt das vordere Dachelement dichtend an einem vorderen Windlauf oberhalb einer Frontscheibe des betreffenden Fahrzeugs an bzw. wird auf diesen angepresst. Beidseits einer Dachöffnung, die durch das Fahrzeugdach verschließbar ist, sind Führungsschienen angeordnet, in denen jeweils eine Betätigungseinrichtung für den Frontspriegel in einer Fahrzeuglängsrichtung verschiebbar geführt ist. Die Betätigungseinrichtung weist als Verriegelungseinrichtung eine Kniehebelmechanik auf. Eine Hebung und Senkung des Frontspriegels wird mittels eines Hebe- und Senkarms bewerkstelligt, der entlang einer Kulissenbahn geführt ist. Der Verriegelungsmechanismus mittels Kniehebel ist ebenfalls kulissenbahngeführt. Derartige kulissenbahngeführte Betätigungseinrichtungen für öffnungsfähige Fahrzeugdächer haben sich zwar bewährt, jedoch bleibt es wünschenswert, sowohl den Wartungsaufwand als auch den Bauteilaufwand bzw. die Herstellkosten weiter zu senken.

Der Erfindung liegt deshalb die Aufgabe zugrunde, ein gattungsgemäßes Fahrzeugdach anzugeben, welches zum einen ohne Kulissenführungen auskommt und andererseits einen minimierten Wartungsaufwand sowie eine geringe Bauteilanzahl besitzt. Weiterhin soll eine direkte Kraftübertragung an das zu bewegende Fahrzeugteil ermöglicht werden. Dies soll möglichst bei einer Ausführung als Faltdach bei einem kleinen Verfahrweg eines Antriebselements, beispielsweise eines Antriebskabels möglich sein. Weiterhin soll die Montage vereinfacht sein, insbesondere sollen einzelne Baubrücken bzw. die gesamte Betätigungseinrichtung vormontierbar und einfach, insbesondere modular zusammensetzbar sein. Eine weitere Aufgabe der Erfindung ist es, ein Fahrzeugdach anzugeben, welches in Verschlusslage selbsthemmend ist und idealerweise ohne zusätzliche Verriegelungselemente auskommt.

Diese Aufgabe wird mit einem öffnungsfähigen Fahrzeugdach mit den Merkmalen des Anspruchs 1 gelöst. Vorteilhafte Ausführungsformen sind in den Unteransprüchen angegeben.

Ein erfindungsgemäßes Fahrzeugdach zeichnet sich dadurch aus, dass eine Betätigungseinrichtung für ein bewegbares Dachelement, insbesondere ein Frontspriegel eines Faltdaches vorhanden ist, wobei die Betätigungseinrichtung eine Hebe-/Senkmechanik aufweist, welche nach Art eines Viergelenks ausgebildet ist und einen Gleitschlitten besitzt, der in einer Führungsschiene geführt ist. Weiterhin besitzt die Betätigungseinrichtung eine Antriebsmechanik mit einem Antriebsschlitten, wobei der Antriebsschlitten mit einem Antriebselement, z.B. einem Antriebskabel und/oder einem Zahnriemen in Verbindung steht. Am Antriebsschlitten ist ein Kniehebel gelenkig angebunden, welcher anderendig mit einem ersten bzgl. des Gleitschlittens der Hebe-/Senkmechanik gelenkig gelagerten ersten Zwischenhebel gekoppelt ist. Weiterhin ist ein zweiter Zwischenhebel vorhanden, der einendig mit dem ersten Zwischenhebel und anderendig mit einem Steuerhebel der Hebe-/Senkmechanik gekoppelt ist. Hierdurch ist einen Betätigungseinrichtung nach Art eines Neun-Gelenks gebildet.

In bevorzugter Art und Weise ist der erste Zwischenhebel und der zweite Zwischenhebel in einer Schließstellung des Daches in einer Totpunkt oder Übertotpunktlage angeordnet. Das bedeutet, dass die Betätigungseinrichtung im geschlossenen Zustand selbsthemmend ist, da Drehpunkte des Steuerhebels und des zweiten Zwischenhebels, des zweiten Zwischenhebels und des ersten Zwischenhebels und des ersten Zwischenhebels am Gleitschlitten auf einer Geraden liegen und somit eine Totpunktlage oder eine Übertotpunktlage darstellen.

Diese Maßnahme hat den Vorteil, dass beispielsweise ein Faltdach im geschlossenen Zustand ohne Einwirkung auf die Betätigungseinrichtung sich nicht von selbst öffnen kann.

Gemäß einer weiteren vorteilhaften Ausführungsform ist der Gleitschlitten und der Antriebsschlitten in einer gemeinsamen Nut einer Führungsschiene relativ zueinander beweglich angeordnet. Diese Maßnahme hat den Vorteil, dass die Führungsschiene relativ einfach ausgebildet werden kann und eine vormontierte Betätigungseinrichtung einfach als Ganzes in die Nut einsetzbar ist.

Gemäß einer weiteren Ausführungsform der Erfindung ist eine Kopplungseinrichtung vorhanden, die in einer angehobenen Stellung des Dachelements den Gleitschlitten mit dem Antriebsschlitten koppelt und in abgesenkter, geschlossener Stellung des Dachelementes den Gleitschlitten relativ zur Führungsschiene festlegt, wobei in dieser Stellung der Antriebsschlitten relativ zum Gleitschlitten freigegeben ist. Diese Kopplungseinrichtung ist in besonders einfacher Art und Weise ein Gleitstein, der in einem vertikalen Schacht im Gleitschlitten schwerkraftbeaufschlagt beweglich ist und Rastvertiefungen sowohl in der Führungsschiene als auch im Antriebsschlitten vorhanden sind, welche mit Steuerschrägen des Gleitsteins zusammenwirken.

Besonders vorteilhaft ist, dass der Gleitschlitten unmittelbar auf dem Antriebsschlitten gleitend verschieblich gelagert ist. Hierdurch gelingt in vorteilhafter Art und Weise eine kompakte, modulartige Vormontage der Betätigungseinrichtung.

Zweckmäßiger Weise ist der Antriebsschlitten mit einem Antriebselement, z.B. einem Zahnriemen oder einem Antriebskabel, welches in der Führungsschiene in einem Antriebsmittelkanal geführt ist, gekoppelt.

Gemäß einer alternativen Ausführungsform der Erfindung besitzt der erste Zwischenhebel einen Hakenausleger, der im geschlossenen Zustand des Daches mit einem Verriegelungsbolzen oder einer Verriegelungskante der Führungsschiene zusammenwirkt. Dies stellt eine Ersatzmaßnahme für den oben erwähnten Gleitstein dar und bewirkt einen besonders stabilen und sicheren Verbund in geschlossener Stellung, was insbesondere einen hohen Einbruchschutz aufgrund von formschlüssiger Verhakung gewährleistet.

Gleichwohl ist von der Erfindung auch eine Ausführungsform erfasst, die sowohl den Gleitstein als auch den Haken besitzt. Zur Verminderung gleitender Reibung im öffnungsfähigen Fahrzeugdach ist es zweckmäßig, sowohl den Gleitschlitten und/oder auch den Antriebsschlitten mittels Rollen in der Führungsschiene verschieblich zu lagern. Dem gleichen Zweck dient auch das Vorsehen einer Rolle am freien Hakenausleger.

Im Folgenden wird die Erfindung beispielhaft anhand der Figuren näher erläutert. Es zeigen:
- Figur 1:: eine erste Variante einer Betätigungseinrichtung für das erfindungsgemäße öffnungsfähige Fahrzeugdach in einer Schließstellung;
- Figur 2:: die Betätigungseinrichtung gemäß Figur 1 in einer ge- öffneten (angehobenen) Stellung;
- Figur 3:: eine zweite Variante einer Betätigungseinrichtung für ein erfindungsgemäßes öffnungsfähiges Fahrzeugdach in geschlossener Stellung;
- Figur 4:: die Variante gemäß Figur 3 in geöffneter Stellung.

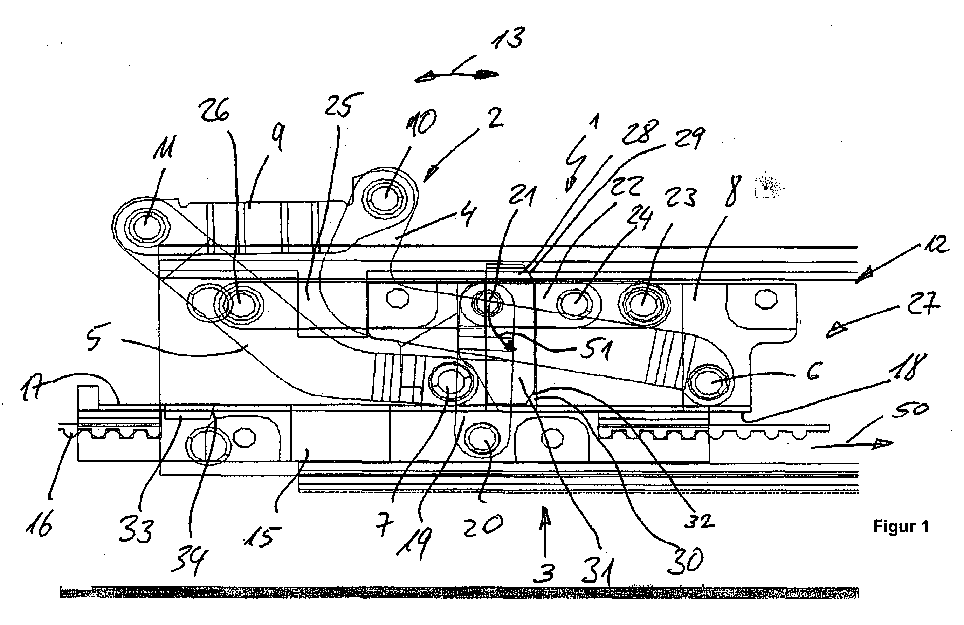

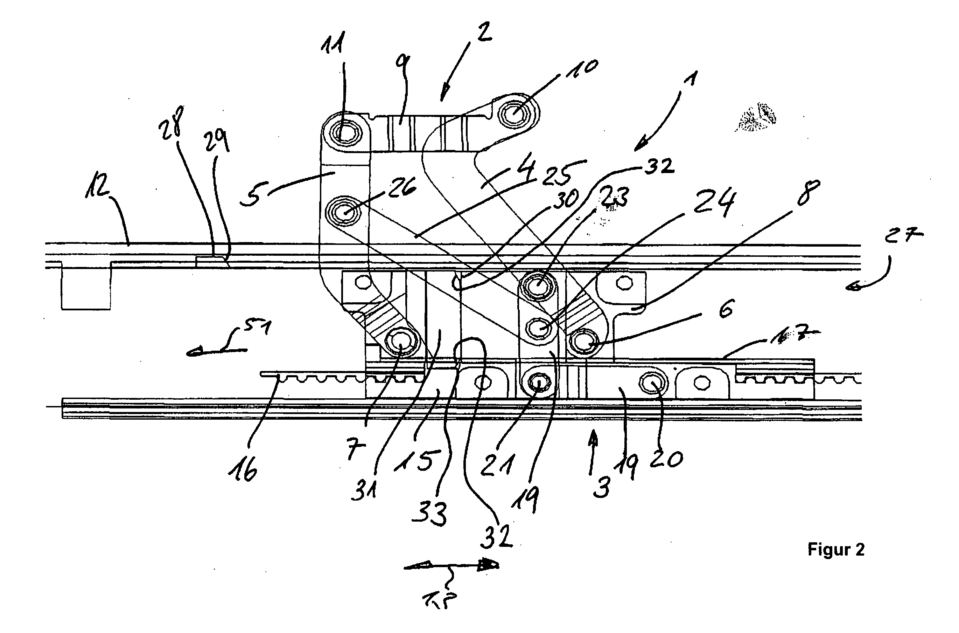

Eine erste Ausführungsform (Figur 1, 2) eines erfindungsgemäßen öffnungsfähigen Fahrzeugdachs mit einer Betätigungseinrichtung 1 besitzt ein bewegliches Dachelement (nicht gezeigt), z.B. einen Frontspriegel eines Faltdaches. Die Betätigungseinrichtung besitzt eine Hebe-/Senkmechanik 2 und eine Antriebsmechanik 3.

Die Hebe-/Senkmechanik 2 ist nach Art eines Viergelenks ausgebildet und besitzt einen Führungshebel 4 und einen Steuerhebel 5. Der Führungshebel 4 und der Steuerhebel 5 sind einendig in Gelenken 6, 7 bzgl. eines Gleitschlittens 8 schwenkbar gelagert. Anderendig ist der Führungshebel 4 und der Steuerhebel 5 mittels eines Trägerlenkers 9 in Gelenken 10 und 11 verbunden. Der Trägerlenker 9 steht mit dem bewegbaren Dachelement, z.B. dem Frontspriegel eines Faltdaches starr in Verbindung.

Der Gleitschlitten 8 ist in einer Führungsschiene 12 in einer Fahrzeuglängsrichtung 13 verschieblich gelagert.

Unterhalb des Gleitschlittens 8 ist ein Antriebsschlitten 15 angeordnet, welcher mit einem Antriebsmittel 16, z.B. einem Zahnriemen oder Antriebkabel in im Wesentlichen bekannter Art und Weise gekoppelt ist. Der Antriebsschlitten 15 besitzt eine Oberseite 17, auf der der Gleitschlitten 8 in bevorzugter Ausbildung der Erfindung gleitend verschieblich mit seiner Unterseite 18 sitzt.

Weiterhin besitzt die Antriebsmechanik 3 einen Kniehebel 19, welche einendig im Gelenk 20 gelenkig mit dem Antriebsschlitten 15 verbunden ist. Anderendig steht der Kniehebel 19 über ein Gelenk 21 mit einem ersten Zwischenhebel 22 gelenkig in Verbindung. Der erste Zwischenhebel 22 ist an seinem freien Ende im Gelenk 23 schwenkbar mit dem Gleitschlitten 8 verbunden.

Zwischen den Gelenken 21, 23 des ersten Zwischenhebels 22 ist ein Gelenk 24 angeordnet, von dem aus sich ein zweiter Zwischenhebel 25 erstreckt. Der zweite Zwischenhebel 25 ist im Gelenk 24 schwenkbar mit dem ersten Zwischenhebel 22 verbunden. An seinem freien Ende ist der zweite Zwischenhebel 25 im Gelenk 26 mit dem Steuerhebel 5 der Hebe-/Senkmechanik 2 gelenkig gekoppelt.

Die Betätigungseinrichtung 1, zusammengesetzt aus der Hebe-/Senkmechanik 2 und der Antriebsmechanik 3 sitzen in einer gemeinsamen Nut 27 der Führungsschiene 12. Die Führungsschiene 12 besitzt an einer vorbestimmten Stelle eine Ausnehmung 28 mit einer in Fahrzeuglängsrichtung 13 nach hinten weisenden Anschrägung 29. Der Gleitschlitten 8 besitzt einen vertikalen Schiebeschacht 30, in dem ein Gleitstein 31 als Verriegelungselement vertikal verschieblich gelagert ist. Der Schiebeschacht 30 durchdringt den Gleitschlitten 8 in vertikaler Richtung vollständig. Der Gleitstein 31 besitzt an seinem freien Ende jeweils eine zur Anschrägung 29 korrespondierende Gegenanschrägung 32. Im Antriebsschlitten 15 ist eine zur Ausnehmung 28 korrespondierende Sacklochausnehmung 33 vorhanden, welche ebenfalls eine in Fahrzeuglängsrichtung 13 nach hinten weisende Anschrägung 34 aufweist. Die vertikale Länge des Gleitsteins 31 ist derart bemessen, dass der Gleitschlitten 8 in vertikaler Richtung vollständig durchdrungen ist und der Gleitstein ein Stück in eine der Ausnehmungen 28 oder 33 hineinragen kann. Der Gleitstein besitzt somit eine vertikale Höhe, die etwas größer ist als die vertikale Höhe des Gleitschlittens 8.

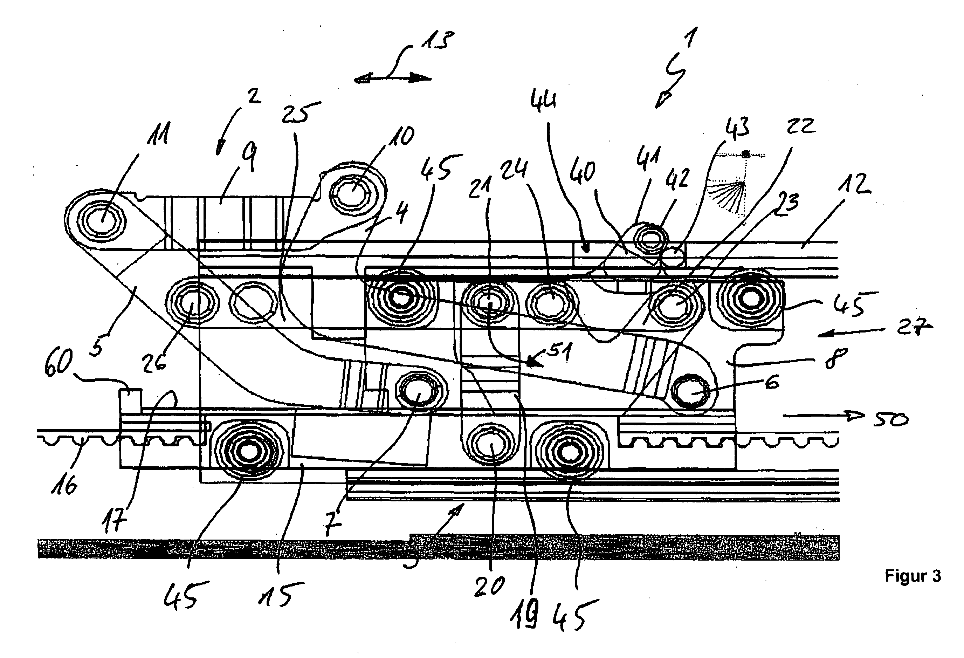

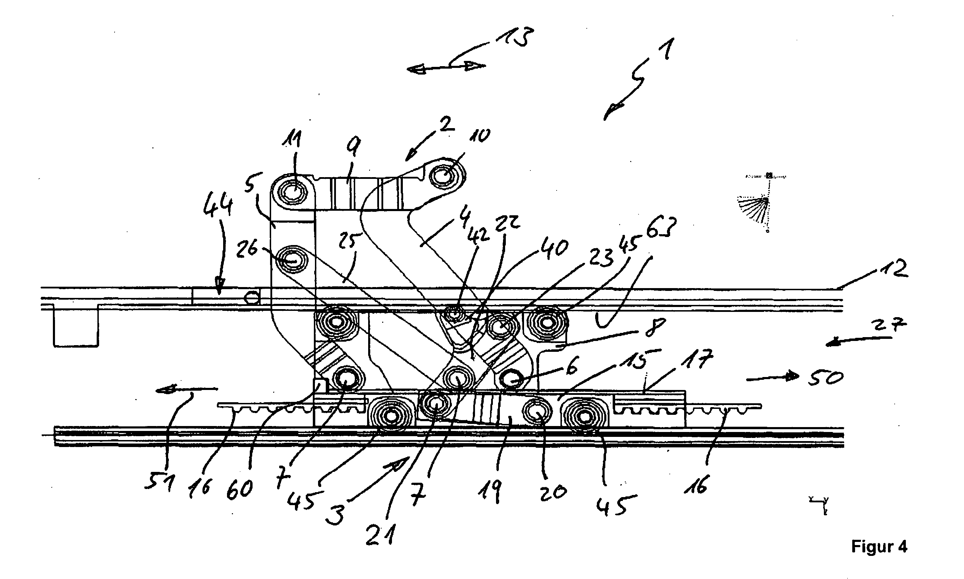

Eine zweite Ausführungsform des erfindungsgemäßen öffnungsfähigen Fahrzeugdachs ist im Wesentlichen identisch zur vorbeschriebenen ersten Ausführungsform aufgebaut, so dass gleiche Bauteile mit gleicher Funktion die gleichen Bezugszeichen erhalten. Im Folgenden werden die Unterschiede der Ausführungsform gemäß Figur 1 und 2 sowie der Ausführungsform gemäß Figur 3 und 4 näher erläutert.

Der wesentliche Unterschiede der beiden Ausführungsformen besteht darin, das die Ausführungsform gemäß der Figuren 3, 4 auf den Gleitstein 31 verzichtet.

Anstelle dessen besitzt der erste Zwischenhebel 22 benachbart zum Gelenk 23 einen Hakenausleger 40, welcher sich zwischen dem Gelenk 23 und dem Gelenk 24 ein Stück vom ersten Zwischenhebel 22 weg erstreckt. An einem freien Ende 41 des Hakenauslegers 40 besitzt der Hakenausleger 40 eine Rolle 42, welche mit einem Sperrbolzen 43 in der Führungsschiene 12 zusammenwirkt. Der Sperrbolzen 43 ist in einer Durchgriffsaussparung 44 angeordnet, welche in einem oberen Randbereich der Führungsschiene 12 angrenzend an die Nut 17 den Führungsschienenrand durchbrechend angeordnet ist. In einer geschlossenen Stellung des öffnungsfähigen Fahrzeugdaches gemäß Figur 3 wirkt der Hakenausleger 41 bzw. dessen Rolle 42 mit dem Sperrbolzen 43 zusammen und legt somit den Gleitschlitten 8 in Fahrzeuglängsrichtung 13 nach hinten (in der Darstellung gemäß Figur 3 also nach rechts) fest. Ein weiterer Unterschied der Ausführungsform gemäß Figur 3 und 4 besteht darin, das sowohl der Antriebsschlitten 15 als auch der Gleitschlitten 8 in der Führungsschiene 12, d. h. in der Nut 27 der Führungsschiene 12 mittels Rollen 45 rollend verschieblich in Fahrzeuglängsrichtung 13 gelagert ist. So versteht sich von selbst, das die Rollen 45 auch bei einer Ausführungsform gemäß Figuren 1, 2 vorgesehen werden können. Umgekehrt kann auch die Ausführungsform gemäß der Figuren 3, 4 gleitend in der Nut 27 der Führungsschiene 12 geführt sein, wie dies im Zusammenhang mit der Ausführungsform gemäß Figur 1, 2 dargestellt ist.

Eine weitere Variante des erfindungsgemäß öffnungsfähigen Fahrzeugdaches (zeichnerisch nicht dargestellt) ergibt sich aus einer Kombination der Ausführungsformen gemäß der Figuren 1, 2 und der Figuren 3, 4 dahingehend, dass sowohl ein Gleitstein 31 als auch ein Hakenausleger 40 vorgesehen ist. Bei der dritten Variante handelt es sich somit um eine Kombination der vorbeschriebenen beiden Ausführungsformen.

Allen drei Ausführungsformen ist gemeinsam, dass die Betätigungseinrichtung 1 für das erfindungsgemäße öffnungsfähige Fahrzeugdach nach Art eines Neungelenks ausgebildet ist, dessen Funktion im Folgenden näher erläutert wird.

In einer geschlossenen Stellung (Figur 1) des öffnungsfähigen Fahrzeugdaches ist die Betätigungseinrichtung 1 in einer Stellung gemäß Figur 1 an einem in Fahrtrichtung 13 vorderen Ende der Führungsschiene 12 angeordnet. Der Antriebsschlitten 15 ist relativ zum Gleitschlitten 8 verschieblich. Der Gleitstein 31 ragt ein Stück in die Ausnehmung 28 der Führungsschiene 12 hinein und sperrt somit den Gleitschlitten 8 in Fahrzeuglängsrichtung 13. Die Hebe-/Senkmechanik 2 befindet sich in ihrer abgesenkten Stellung, so dass der an den Trägerlenker 9 angebrachte Frontspriegel mit einem Windlauf oder einem vorderen Faltdachrahmenteil in Kontakt steht und ein flexibler Dachbezug ausgespannt angeordnet ist. In dieser Stellung ist das öffnungsfähige Fahrzeugdach, z. B. ein Faltdach geschlossen. Die Antriebsmechanik 3 ist in dieser Stellung selbsthemmend ausgebildet, da sich die Gelenke 26, 21, 24, 23 der ersten und zweiten Zwischenhebel 22, 25 in einer Totpunktlage oder in einer Übertotpunktlage befinden.

Ausgehend von der geschlossenen Stellung gemäß Figur 1 wird nunmehr über das Antriebsmittel 16 eine Zugkraft in Fahrzeuglängsrichtung 13 nach hinten (Pfeil 50) aufgebracht, so dass der Antriebsschlitten 15 relativ zum Gleitschlitten 8 nach hinten bewegt wird. Mit dem Antriebsschlitten 15 bewegt sich das Gelenk 20 nach hinten. Hierdurch wird über den Kniehebel 19 der Gelenkpunkt 21 in Pfeilrichtung 51 bewegt, so dass die Ausgangslage (Totpunktlage oder Übertotpunktlage) der Zwischenhebel 22, 25 gelöst wird. Bei einem Weiterbewegen des Antriebschlittens 15 in Pfeilrichtung 50 wird der erste Zwischenhebel 22 um das Gelenk 23 relativ zum Gleitschlitten 8 bis in eine Stellung gemäß Figur 2 (vertikale Ausrichtung des ersten Zwischenhebels 22) bewegt. In dieser Stellung befindet sich der Kniehebel 19 in einer horizontalen Lage gemäß Figur 2. Die Hebe-/Senkmechanik 2 ist über den zweiten Zwischenhebel 25 in eine angehobene Position bewegt worden (siehe Stellung gemäß Figur 2). In einer vollständig angehobenen Position der Hebe-/Senkmechanik 2 befindet sich die Ausnehmung 33 unterhalb des Gleitsteins 31, so dass dieser vertikal nach unten fallen kann und somit den Antriebsschlitten 15 mit dem Gleitschlitten 8 koppelt. Gleichzeitig wird durch das vertikale Verschieben des Gleitsteins 31 die gesamte Betätigungseinrichtung 1 relativ zur Führungsschiene 12 freigegeben, da der Gleitstein 31 aus der Ausnehmung 28 gelangt. In dieser gekoppelten Anordnung des Gleitschlittens 8 und des Antriebsschlittens 15 kann die gesamte Betätigungseinrichtung 1 mittels des Antriebsmittels 16 entlang der Pfeilrichtung 50 nach hinten verschoben werden. Hierdurch wird also der angehobene Frontspriegel nach hinten bewegt. Der flexible Dachbezug wird hierdurch in Falten gelegt. Das Faltdach ist somit geöffnet.

Der Schließvorgang verläuft genau umgekehrt. Beim Aufbringen einer Antriebskraft in einer Pfeilrichtung 51 nach vorne ausgehend von einer Stellung gemäß Figur 2, wird die gesamte in Öffnungsstellung befindliche Betätigungseinrichtung 1 entlang der Pfeilrichtung 51 bewegt, bis der Gleitstein 31 unterhalb der Ausnehmung 28 angekommen ist. Durch eine hierdurch zunehmende Spannung des flexiblen Faltdachbezuges und eine weiter angelegte Antriebskraft an das Antriebsmittel 16, wird der Gleitstein 31 über die Anschrägung 34 entgegen der Schwerkraft nach oben versetzt und gelangt ein Stück in die Ausnehmung 28, so dass der Gleitschlitten 8 gegenüber der Führungsschiene 12 blockiert ist. Gleichzeitig wird die Kopplung des Gleitschlittens 8 mit dem Antriebsschlitten 15 gelöst. Ein Weiterbewegen des Antriebsschlittens 15 bewirkt ein Schließen des Faltdaches in umgekehrter Reihenfolge zum vorbeschriebenen Öffnungsvorgang. Am Ende des Schließvorganges befinden sich die Zwischenlenker 22, 25 wiederum in der Übertotpunkt oder Totpunktlage, so dass eine Selbsthemmung der Antriebsmechanik 3 gewährleistet ist.

Die Funktionsweise der zweiten Ausführungsform gemäß der Figuren 3, 4 ist hinsichtlich der kinematischen Abläufe bei der Hebe-/Senkmechanik 2 und der Antriebsmechanik 3 identisch. Lediglich die Kopplung/Entkopplung des Gleitschlittens 8 mit dem Antriebsschlitten 15 erfolgt unter Verzicht auf den Gleitstein 31 in etwas anderer Form.

In der geschlossenen Stellung gemäß Figur 3 der zweiten Ausführungsform der Betätigungseinrichtung 1 ist der Hakenausleger 41 mit dem Sperrbolzen 43 in Kontakt, so dass der Gleitschlitten 8 relativ zur Führungsschiene 12 blockiert ist. Der Antriebsschlitten 15 wird nunmehr entlang der Pfeilrichtung 50 verschoben, so dass die Hebe-/Senkmechanik 2 von einer geschlossenen Stellung in eine geöffnete Stellung gemäß Figur 4 verbracht wird. Gleichzeitig gelangt der Hakenausleger 41 außer Eingriff mit dem Sperrbolzen 43 und gibt somit den Gleitschlitten 8 gegenüber der Führungsschiene 12 frei. In dieser Stellung wird die Antriebskraft entlang der Pfeilrichtung 50 mittels eines Anschlages 60 am Antriebsschlitten 15, der in dieser Stellung am Gleitschlitten 8 anliegt auf den Gleitschlitten 8 übertragen. Somit gelingt eine gekoppelte Mitnahme des Gleitschlittens 8 in Richtung der Antriebsrichtung 50.

Beim Schließen des öffnungsfähigen Fahrzeugdaches aus einer Stellung gemäß Figur 4 wird zunächst eine Antriebskraft in Richtung der Pfeilrichtung 51 auf das Antriebsmittel 16 aufgebracht. Hierdurch wird der Gleitschlitten 8 über den Kniehebel 19 und den ersten Zwischenhebel 22 zusammen mit dem Antriebsschlitten 15 in Richtung 51 bewegt. Der Hakenausleger 40 bzw. dessen Rolle 42 rollt an einer Unterseite 63 einer oberen Begrenzungswandung der Nut 27 ab, bis die Durchgriffsaussparung 44 erreicht ist. Nach Erreichen der Durchgriffsaussparung 44 kann der Hakenausleger 40 und somit der erste Zwischenhebel 22 nach oben verschwenkt werden. Hierdurch gelangt der Hakenausleger 40 wiederum mit dem Sperrbolzen 43 in Kontakt. Gleichzeitig wird die Hebe-/Senkmechanik 2 über die Antriebsmechanik 3 bei einer Weiterbewegung des Antriebsschlittens 15 in Richtung der Pfeilrichtung 51 von einer geöffneten Position in eine geschlossene Übertotpunktlage gemäß Figur 3 verfahren. Hierdurch wird also der beim Schließen schlaffe Faltdachbezug ausgespannt und der Frontspriegel gelangt mit seinem entsprechenden Gegenstück an der Fahrzeugkarosserie in Kontakt. Das Dach ist wiederum geschlossen.

Das erfindungsgemäße öffnungsfähige Fahrzeugdach hat insbesondere die Vorteile, dass auf eine Kulissenführung vollständig verzichtet werden kann, so dass die gesamte Hebe- und Senkbewegung sowie die Ausspannbewegung über ein Hebelwerk bewerkstelligt wird, welches ausschließlich über Gelenkbuchsen geführt ist. Dies vereinfacht insbesondere die Wartung und Schmierung während des Betriebs. Weiterhin müssen keine Kulissenführungen mit Fett versehen werden, so dass eine Verschmutzung oder Knirschgeräusche während des Betriebs weitgehend vermieden sind, da die Anzahl der Gleitflächen gegenüber dem Stand der Technik reduziert ist. Insbesondere hat sich herausgestellt, dass durch die modulartige Vormontierbarkeit eine erhebliche Kosteneinsparung gegenüber einer Lösung gemäß dem Stand der Technik der DE 102 03 204 B4 erreicht werden kann. Insbesondere kann eine Wartungsfreiheit hergestellt werden, wenn der Gleitschlitten 8 und der Antriebsschlitten 15 auf Rollen 45 in der Führungsschiene 12 läuft. Ein weiterer Vorteil ist, dass eine direktere Kraftübertragung auf den Frontspriegel erfolgt, d. h. zwischen dem kraftaufbringenden Antriebsschlitten 15 und dem Trägerlenker 9 sind nur wenige kraftumlenkende oder kraftübertragende Teile vorhanden. Als weiterer Vorteil hat sich herausgestellt, das zum Öffnen und Schließen des erfindungsgemäßen öffnungsfähigen Fahrzeugdaches durch die erfindungsgemäße Betätigungseinrichtung ein kleinerer Verfahrweg des Antriebsmittels 16 erforderlich ist. Insbesondere hat sich gegenüber dem Stand der Technik gemäß der DE 102 03 204 B4 eine Verminderung des Verfahrweges um etwa 20 mm ergeben. Dies wirkt sich positiv auf die Bauraumverhältnisse aus. Ein weiterer Vorteil ist, dass die Betätigungseinrichtung in der geschlossenen Lage ohne weitere Mittel selbsthemmend ist und somit ein guter Einbruchschutz gewährleistet ist.

### Bezugszeichenliste

- 1: Betätigungseinrichtung
- 2: Hebe-/Senkmechanik
- 3: Antriebsmechanik
- 4: Führungshebel
- 5: Steuerhebel
- 6,7: Gelenke
- 8: Gleitschlitten
- 9: Trägerlenker
- 10, 11: Gelenke
- 12: Führungsschiene
- 13: Fahrzeuglängsrichtung

- 15: Antriebsschlitten
- 16: Antriebsmittel
- 17: Oberseite
- 18: Unterseite
- 19: Kniehebel
- 20, 21: Gelenke
- 22: Zwischenhebel
- 23, 24: Gelenke
- 25: Zwischenhebel
- 26: Gelenk
- 27: Nut
- 28: Ausnehmung
- 29: Anschrägung
- 30: Schiebeschacht
- 31: Gleitstein
- 32: Gegenschrägung
- 33: Sacklochausnehmung
- 34: Anschrägungen
- 40: Hakenausleger
- 41: freies Ende

- 42: Rolle
- 43: Sperrbolzen
- 44: Durchgriffsaussparung
- 45: Rolle
- 50, 51: Pfeilrichtungen
- 60: Anschlag
- 63: Unterseite

## Patentansprüche

1. Öffnungsfähiges Fahrzeugdach mit einer Betätigungseinrichtung (1) für ein bewegbares Dachelement, **dadurch gekennzeichnet, dass** die Betätigungseinrichtung (1) eine Hebe-/Senkmechanik (2) nach Art eines Viergelenks mit einem Gleitschlitten (8) besitzt und eine Antriebsmechanik (3) mit einem Antriebsschlitten (15) und einem Kniehebel (19) vorhanden ist, wobei der Kniehebel (19) mit einem bzgl. des Gleitschlittens (8) gelenkig gelagerten ersten Zwischenhebel (22) gekoppelt ist und ein zweiter Zwischenhebel (25) einendig mit dem ersten Zwischenhebel (22) und anderendig mit einem Steuerhebel der Hebe-/Senkmechanik (2) gekoppelt ist.

2. Öffnungsfähiges Fahrzeugdach nach Anspruch 1, **dadurch gekennzeichnet, dass** der erste Zwischenhebel (22) und der zweite Zwischenhebel (25) in einer Schließstellung des Daches in einer Totpunkt oder Übertotpunktlage angeordnet sind.

3. Öffnungsfähiges Fahrzeugdach nach Anspruch 1 oder 2, **dadurch gekennzeichnet, dass** der Gleitschlitten (8) und der Antriebsschlitten (15) in einer gemeinsamen Nut (27) einer Führungsschiene (12) relativ beweglich zueinander angeordnet sind.

4. Öffnungsfähiges Fahrzeugdach nach einem der vorangegangenen Ansprüche, **dadurch gekennzeichnet, dass** eine Kopplungseinrichtung (4) vorhanden ist, die in einer angehobenen Stellung des Dachelements den Gleitschlitten (8) mit dem Antriebsschlitten koppelt in abgesenkter, geschlossener Stellung des Dachelements den Gleitschlitten (8) relativ zur Führungsschiene (12) festgelegt und in dieser Stellung den Antriebsschlitten (15) relativ zum Gleitschlitten (8) freigibt.

5. Öffnungsfähiges Fahrzeugdach nach Anspruch 4 , **dadurch gekennzeichnet, dass** die Kopplungseinrichtung ein Gleitstein ist.

6. Öffnungsfähiges Fahrzeugdach nach einem der vorangegangenen Ansprüche, **dadurch gekennzeichnet, dass** der Gleitschlitten (8) unmittelbar auf dem Antriebsschlitten (15) gleitend verschieblich gelagert ist.

7. Öffnungsfähiges Fahrzeugdach nach einem der vorangegangenen Ansprüche, **dadurch gekennzeichnet, dass** der Antriebsschlitten (15) mit einem Antriebselement, z.B. einem Zahnriemen oder einem Antriebkabel gekoppelt ist.

8. Öffnungsfähiges Fahrzeugdach nach einem der vorangegangenen Ansprüche, **dadurch gekennzeichnet, dass** der erste Zwischenhebel (22) einen Haken besitzt, der im geschlossenen Zustand des Daches mit einem Verriegelungsbolzen oder einer Verriegelungskante der Führungsschiene (12) zusammenwirkt.

9. Öffnungsfähiges Fahrzeugdach nach einem der vorangegangenen Ansprüche, **dadurch gekennzeichnet, dass** der Gleitschlitten (8) und/oder der Antriebsschlitten (15) mittels Rollen (42) in der Führungsschiene (12) geführt sind.

10. Öffnungsfähiges Fahrzeugdach nach Anspruch 8, **dadurch gekennzeichnet, dass** an einem freien Ende des Hakenauslegers eine Rolle (42) angeordnet ist.

## Claims

1. Openable vehicle roof having an actuating device (1) for a movable roof element, **characterized in that** the actuating device (1) has a lifting/lowering mechanism (2) in the manner of a four-bar linkage with a sliding carriage (8), and there is a driving mechanism (3) with a driving carriage (15) and a toggle lever (19), the toggle lever (19) being coupled to a first intermediate lever (22) which is mounted in an articulated manner with respect to the sliding carriage (8), and a second intermediate lever (25) is coupled at one end to the first intermediate lever (22) and at the other end to a control lever of the lifting/lowering mechanism (2).

2. Openable vehicle roof according to Claim 1, **characterized in that** the first intermediate lever (22) and the second intermediate lever (25) are arranged in a dead centre position or position beyond the dead centre in a closed position of the roof.

3. Openable vehicle roof according to Claim 1 or 2, **characterized in that** the sliding carriage (8) and the driving carriage (15) are arranged movably relative to each other in a common groove (27) of a guide rail (12).

4. Openable vehicle roof according to one of the preceding claims, **characterized in that** there is a coupling device (4) which, in a raised position of the roof element, couples the sliding carriage (8) to the driving carriage, and, in a lowered, closed position of the roof element, fixes the sliding carriage (8) relative to the guide rail (12) and, in this position, releases the driving carriage (15) relative to the sliding carriage (8).

5. Openable vehicle roof according to Claim 4, **characterized in that** the coupling device is a sliding block.

6. Openable vehicle roof according to one of the preceding claims, **characterized in that** the sliding carriage (8) is mounted displaceably in a sliding manner directly on the driving carriage (15).

7. Openable vehicle roof according to one of the preceding claims, **characterized in that** the driving carriage (15) is coupled to a driving element, for example a toothed belt or a driving cable.

8. Openable vehicle roof according to one of the preceding claims, **characterized in that** the first intermediate lever (22) has a hook which, in the closed state of the roof, interacts with a locking bolt or a locking edge of the guide rail (12).

9. Openable vehicle roof according to one of the preceding claims, **characterized in that** the sliding carriage (8) and/or the driving carriage (15) are guided in the guide rail (12) by means of rollers (42).

10. Openable vehicle roof according to Claim 8, **characterized in that** a roller (42) is arranged at a free end of the hook extension arm.

## Revendications

1. Toit ouvrant de véhicule avec un dispositif d'actionnement (1) pour un élément mobile de toit, **caractérisé en ce que** le dispositif d'actionnement (1) possède un mécanisme de montée/descente (2) du type quadrilatère avec un coulisseau de glissement (8) et **en ce qu'**un mécanisme d'entraînement (3) doté d'un coulisseau d'entraînement (15) et d'un levier coudé (19) est prévu, le levier coudé (19) étant couplé à un premier levier intermédiaire (22) disposé de façon articulée par rapport au coulisseau de glissement (8) et un deuxième levier intermédiaire (25) étant couplé à une extrémité au premier levier intermédiaire (22) et à l'autre extrémité au levier de commande du mécanisme de montée/descente (2).

2. Toit ouvrant de véhicule selon la revendication 1, **caractérisé en ce que** le premier levier intermédiaire (22) et le deuxième levier intermédiaire (25) sont disposés, dans une position fermée du toit, dans une position de point mort ou de sur-point mort.

3. Toit ouvrant de véhicule selon la revendication 1 ou 2, **caractérisé en ce que** le coulisseau de glissement (8) et le coulisseau d'entraînement (15) sont disposés de façon mobile l'un par rapport à l'autre dans une rainure commune (27) d'un rail de guidage (12).

4. Toit ouvrant de véhicule selon l'une quelconque des revendications précédentes, **caractérisé en ce qu'**un dispositif de couplage (4) est prévu qui accouple dans une position relevée de l'élément de toit le coulisseau de glissement (8) au coulisseau d'entraînement et fixe dans une position fermée, rabaissée de l'élément de toit le coulisseau de glissement (8) par rapport au rail de guidage (12) et libère dans cette position le coulisseau d'entraînement (15) par rapport au coulisseau de glissement (8).

5. Toit ouvrant de véhicule selon la revendication 4, **caractérisé en ce que** le dispositif de couplage est un galet glisseur.

6. Toit ouvrant de véhicule selon l'une quelconque des revendications précédentes, **caractérisé en ce que** le coulisseau de glissement (8) est disposé directement de façon mobile et coulissante sur le coulisseau d'entraînement (15).

7. Toit ouvrant de véhicule selon l'une quelconque des revendications précédentes, **caractérisé en ce que** le coulisseau d'entraînement (15) est couplé à un élément d'entraînement, par exemple une courroie dentée ou un câble d'entraînement.

8. Toit ouvrant de véhicule selon l'une quelconque des revendications précédentes, **caractérisé en ce que** le premier levier intermédiaire (22) possède un crochet qui interagit à l'état fermé du toit avec un boulon de verrouillage ou une arête de verrouillage du rail de guidage (12).

9. Toit ouvrant de véhicule selon l'une quelconque des revendications précédentes, **caractérisé en ce que** le coulisseau de glissement (8) et/ou le coulisseau d'entraînement (15) sont guidés à l'aide de rouleaux (42) dans le rail de guidage (12).

10. Toit ouvrant de véhicule selon la revendication 8, **caractérisé en ce qu'**un rouleau (42) est disposé à une extrémité libre du portant de crochet.
